(19) Europäisches Patentamt
European Patent Office
Office européen des brevets

(11) **EP 4 398 238 A1**

(12) **EUROPEAN PATENT APPLICATION**
published in accordance with Art. 153(4) EPC

(43) Date of publication:
**10.07.2024 Bulletin 2024/28**

(21) Application number: **22862384.9**

(22) Date of filing: **09.08.2022**

(51) International Patent Classification (IPC):
*G10K 11/16* (2006.01)    *F16L 55/033* (2006.01)
*F24F 13/02* (2006.01)    *G10K 11/172* (2006.01)

(52) Cooperative Patent Classification (CPC):
**F16L 55/033; F24F 13/02; G10K 11/16; G10K 11/172**

(86) International application number:
**PCT/JP2022/030476**

(87) International publication number:
**WO 2023/032618 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 30.08.2021 JP 2021139628
26.07.2022 JP 2022118691

(71) Applicant: FUJIFILM Corporation
Tokyo 106-8620 (JP)

(72) Inventors:
• HAKUTA, Shinya
Ashigarakami-gun, Kanagawa 258-8577 (JP)
• YAMAZOE, Shogo
Ashigarakami-gun, Kanagawa 258-8577 (JP)
• SUGAWARA, Yoshihiro
Ashigarakami-gun, Kanagawa 258-8577 (JP)
• ITAI, Yuichiro
Ashigarakami-gun, Kanagawa 258-8577 (JP)

(74) Representative: **Meissner Bolte Partnerschaft mbB**
**Widenmayerstraße 47**
**80538 München (DE)**

(54) **VENTILATION PATH SILENCER**

(57)    A silencer for a ventilation passage effectively deadens sound having a broad frequency band while having a compact structure.

A silencer for a ventilation passage according to an embodiment of the present invention is a silencer for a ventilation passage that includes a housing and deadens sound in a ventilation passage, and an internal space of the housing forms a part of the ventilation passage. The silencer for a ventilation passage includes an inlet opening that is positioned on one end side of a part of the ventilation passage in the housing, an outlet opening that is positioned on the other end side of a part of the ventilation passage in the housing, a sound absorbing member that is housed in the housing, and a vibration portion that is provided on the housing and reduces sound passing through the ventilation passage.

FIG. 1

## Description

## BACKGROUND OF THE INVENTION

### 1. Field of the Invention

The present invention relates to a silencer for a ventilation passage that deadens sound in a ventilation passage.

### 2. Description of the Related Art

Among ventilation passages, there is a ventilation passage that comprises a silencer for deadening sound (noise) passing through the ventilation passage. Examples of such a ventilation passage with a silencer include a duct disclosed in, for example, JP2016-133226A.

The duct disclosed in JP2016-133226A includes a resonator that includes an opening portion provided on a side surface of the duct, and a soundproof cover that covers the resonator. Further, a part of the duct, the resonator, and the soundproof cover form a sound deadening structure, and noise transmitted through the duct is deadened by this sound deadening structure.

## SUMMARY OF THE INVENTION

Since it is necessary to ensure an installation space for the silencer in a configuration in which the silencer is disposed outside the ventilation passage as with the duct disclosed in JP2016-133226A, the structure of a portion of the ventilation passage on which the silencer is provided is increased in size. However, considering restrictions on an installation space and the like, the silencer provided on the ventilation passage is required to have a more compact structure.

Meanwhile, sound deadening performance against sound having a low frequency band tends to deteriorate in a small silencer. For this reason, it is important for the silencer for a ventilation passage to ensure sound deadening performance against sound having a low frequency band while having a compact structure. In addition, it is preferable that the silencer for a ventilation passage can effectively deaden sound having a high frequency band together with sound having a low frequency band.

The present invention has been made in consideration of the above-mentioned circumstances, and an object of the present invention is to provide a silencer for a ventilation passage that can solve the problems in the related art, and specifically, can effectively deaden sound having a broad frequency band while having a compact structure.

In order to achieve the above-mentioned object, the present invention has the following configurations.

[1] A silencer for a ventilation passage that includes a housing and deadens sound in a ventilation passage, in which an internal space of the housing forms a part of the ventilation passage, and the silencer for a ventilation passage comprising: an inlet opening that is formed in the housing and is positioned on one end side of a part of the ventilation passage; an outlet opening that is formed in the housing and is positioned on the other end side of a part of the ventilation passage; a sound absorbing member that is housed in the housing; and a vibration portion that is provided on the housing and reduces sound passing through the ventilation passage.

[2] The silencer for a ventilation passage according to [1], in which at least a part of an outer wall surface of the housing is a flat surface, and a portion, of which the outer wall surface is a flat surface, of the housing forms the vibration portion.

[3] The silencer for a ventilation passage according to [1] or [2], in which the inlet opening is formed in one edge surface of an inner wall surface of the housing in a first direction, the outlet opening is formed in the other edge surface of the inner wall surface of the housing in the first direction, and in a case where a distance between the inlet opening and the outlet opening is denoted by L and a sound speed is denoted by c, a first natural frequency of the vibration portion is less than $c/(2 \times L)$.

[4] The silencer for a ventilation passage according to [3], in which the first natural frequency is less than $c/(4 \times L)$.

[5] The silencer for a ventilation passage according to any one of [1] to [4], in which the housing includes a wall surrounding the internal space of the housing, and the wall includes the vibration portion and each portion of the wall is made of the same material.

[6] The silencer for a ventilation passage according to [5], in which the vibration portion and a peripheral portion of the vibration portion are continuous with each other in the wall.

[7] The silencer for a ventilation passage according to any one of [1] to [6], in which the inlet opening is formed in one edge surface of an inner wall surface of the housing in a first direction, the outlet opening is formed in the other edge surface of the inner wall surface of the housing in the first direction, and with regard to a contour line of a cross section of which a normal direction is the first direction among cross sections of the housing, a ratio of a length of a longest side of the contour line to a length of a shortest side of the contour line is 1.2 or more.

[8] The silencer for a ventilation passage according to any one of [1] to [7], in which the inlet opening is formed in one edge surface of an inner wall surface of the housing in a first direction, the outlet opening is formed in the other edge surface of the inner wall surface of the housing in the first direction, and a range in which the inlet opening is present and a range in which the outlet opening is present overlap with each other in a second direction intersecting with the first direction and in a third direction intersecting with both the first direction and the second direction.

[9] The silencer for a ventilation passage according to any one of [1] to [8], in which the inlet opening is formed in one edge surface of an inner wall surface of the housing in a first direction, the outlet opening is formed in the other edge surface of the inner wall surface of the housing in the first direction, a length of the housing in a second direction intersecting with the first direction is longer than a length of the housing in a third direction intersecting with both the first direction and the second direction, and each of the inlet opening and the outlet opening is provided at a position closer to an end of the housing than to a middle of the housing in the second direction.

[10] The silencer for a ventilation passage according to any one of [1] to [9], in which the inlet opening is formed in one edge surface of an inner wall surface of the housing in a first direction, the outlet opening is formed in the other edge surface of the inner wall surface of the housing in the first direction, a connecting member is connected to at least one opening of the inlet opening or the outlet opening in the internal space of the housing, a connecting member-side opening portion connected to the at least one opening is provided on an inner side of the connecting member, and a size of the connecting member-side opening portion is increased as a distance from the at least one opening in the first direction is increased.

[11] The silencer for a ventilation passage according to [10], in which the connecting member is connected to each of the inlet opening and the outlet opening in the internal space of the housing.

[12] The silencer for a ventilation passage according to any one of [1] to [11], in which a weight is mounted on the vibration portion.

[13] The silencer for a ventilation passage according to any one of [1] to [12], in which the inlet opening is formed in one edge surface of an inner wall surface of the housing in a first direction, the outlet opening is formed in the other edge surface of the inner wall surface of the housing in the first direction, and the sound absorbing member is disposed to avoid a range in which the inlet opening is present and a range in which the outlet opening is present in a second direction intersecting with the first direction and in a third direction intersecting with both the first direction and the second direction.

[14] The silencer for a ventilation passage according to [13], in which a ratio of a region, which is occupied by the sound absorbing member, to a volume of a space, which excludes a flow channel portion in the housing, of the internal space of the housing is 80% or more.

[15] The silencer for a ventilation passage according to any one of [1] to [14], in which openings formed in the housing are only the inlet opening and the outlet opening.

[16] The silencer for a ventilation passage according to [3] or [4], in which the vibration portion is capable of deadening sound having a frequency of 2400 Hz or less by vibrating at the first natural frequency.

[17] The silencer for a ventilation passage according to [3] or [4], in which the vibration portion is capable of deadening sound having a frequency of 1700 Hz or less by vibrating at the first natural frequency.

[18] The silencer for a ventilation passage according to any one of [1] to [17], in which the housing is provided with a plurality of the vibration portions.

[19] The silencer for a ventilation passage according to any one of [1] to [18], in which a part of the internal space of the housing forms a resonance space that absorbs sound via resonance.

The silencer for a ventilation passage according to an embodiment of the present invention deadens sound having a low frequency band via the vibration of the housing that forms a part of the ventilation passage. Further, sound having a high frequency band can be deadened by the sound absorbing member disposed in the housing. As a result, it is possible to provide a silencer for a ventilation passage that can deaden sound over a high frequency band from a low frequency band by a relative compact structure.

**BRIEF DESCRIPTION OF THE DRAWINGS**

Fig. 1 is a cross-sectional view showing the configuration of a silencer for a ventilation passage according to an embodiment of the present invention.
Fig. 2 is a top view showing the silencer for a ventilation passage according to the embodiment of the present invention.
Fig. 3 is a side view showing the silencer for a ventilation passage according to the embodiment of the present invention.
Fig. 4 is a diagram showing a downstream edge surface of the silencer for a ventilation passage according to the embodiment of the present invention.
Fig. 5 is a side view of a silencer for a ventilation passage according to a first modification example of the present invention.
Fig. 6A is a side view showing a first modification example of a connecting member.
Fig. 6B is a side view showing a second modification example of the connecting member.
Fig. 7 is a diagram showing a sound energy distribution and a flow of sound in a housing in a case where λ/4 resonance occurs.
Fig. 8 is a graph showing sound-deadening characteristics of the silencer for a ventilation passage.

Fig. 9 is a diagram showing a sound pressure distribution in the housing in a case where resonance in a rear space of the connecting members occurs.

Fig. 10 is a graph showing sound-deadening characteristics measured in Example 1 and Comparative Example 1, respectively.

Fig. 11 is a graph showing sound-deadening characteristics measured in Example 2 and Comparative Example 2, respectively.

Fig. 12 is a graph showing sound-deadening characteristics measured in Examples 2 and 3, respectively.

Fig. 13 is a graph showing sound-deadening characteristics measured in Example 4 and Comparative Example 3, respectively.

Fig. 14 is a graph showing sound-deadening characteristics measured in Examples 2 and 5, respectively.

Fig. 15 is a graph showing sound-deadening characteristics measured in Examples 6 and 7, respectively.

Fig. 16 is a diagram showing an appearance of a silencer according to Examples 8 and 9.

Fig. 17 is a graph showing sound-deadening characteristics measured in Examples 8 and 9.

Fig. 18 is a diagram showing a relationship between an occupancy ratio of a sound absorbing member and the sound pressure of wind noise.

Fig. 19A is a side view of a silencer for a ventilation passage according to a second modification example of the present invention.

Fig. 19B is a cross-sectional view of the silencer for a ventilation passage according to the second modification example of the present invention, and is a view corresponding to Fig. 1.

Fig. 20A is a side view of a silencer for a ventilation passage according to a third modification example of the present invention.

Fig. 20B is a cross-sectional view of the silencer for a ventilation passage according to the third modification example of the present invention, and is a view corresponding to Fig. 1.

## DESCRIPTION OF THE PREFERRED EMBODIMENTS

A silencer for a ventilation passage according to an embodiment of the present invention will be described in detail below with reference to a preferred embodiment shown in the accompanying drawings. An embodiment described below is merely an example for facilitating the understanding of the present invention, and does not limit the present invention. That is, the present invention may be modified or improved from the following embodiment without departing from the scope thereof. Further, the material, the shape, or the like of each member used to implement the present invention can be set in any manner in accordance with the purpose of use of the present invention and the technical level and the like at the time of implementation of the present invention. Furthermore, the present invention includes its equivalents.

In addition, in this specification, a numerical range represented using "to" means a range that includes numerical values written before and after "to" as a lower limit and an upper limit.

Further, in this specification, "orthogonal", "perpendicular", and "parallel" include a range of an error to be allowed in a technical field to which the present invention pertains. For example, "orthogonal", "perpendicular", and "parallel" in this specification mean that an angle is in a range including an error smaller than ±10° from exact orthogonal, exact perpendicular, or exact parallel. An error from exact orthogonal or exact parallel is preferably 5° or less and more preferably 3° or less.

Furthermore, in this specification, the meanings of "the same", "identical", and "equal" may include the range of an error to be generally allowed in the technical field to which the present invention pertains.

In addition, in this specification, the meanings of "the entire", "any", and "all" may include the range of an error to be generally allowed in the technical field to which the present invention pertains, and may include the case of, for example, 99% or more, 95% or more, or 90% or more in addition to the case of 100%.

Further, "sound deadening" in the present invention is a concept including both of sound insulation and sound absorption. The sound insulation means blocking sound, in other words, preventing the transmission of sound. The sound absorption means reducing reflected sound and means absorbing sound (audio) in easy terms.

Furthermore, three directions orthogonal to each other will be referred to as "XYZ directions" in the following description. The X direction corresponds to a first direction of the present invention, the Z direction corresponds to a second direction of the present invention, and the Y direction corresponds to a third direction of the present invention.

In addition, in the following description, a side of a ventilation passage closer to an air outlet will be referred to as "downstream side" and a side opposite thereto, that is, a side of the ventilation passage closer to an air inlet will be referred to as "upstream side".

[With regard to configuration example of silencer for ventilation passage according to embodiment of present invention]

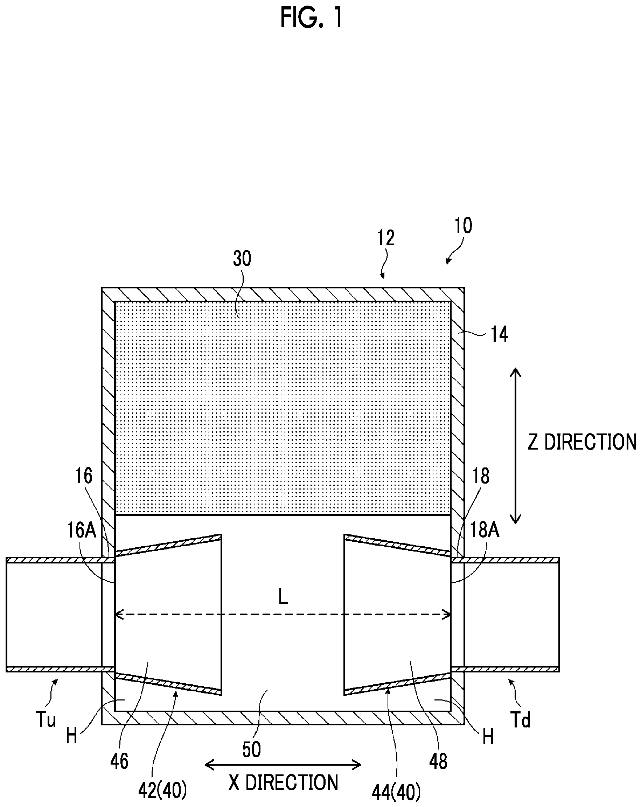

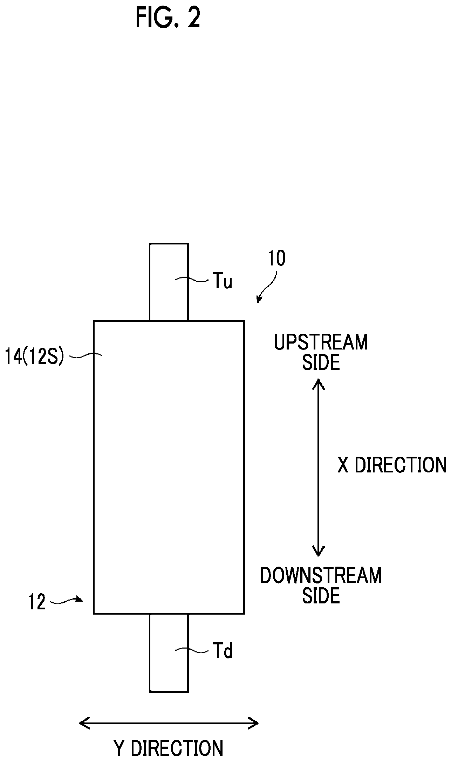

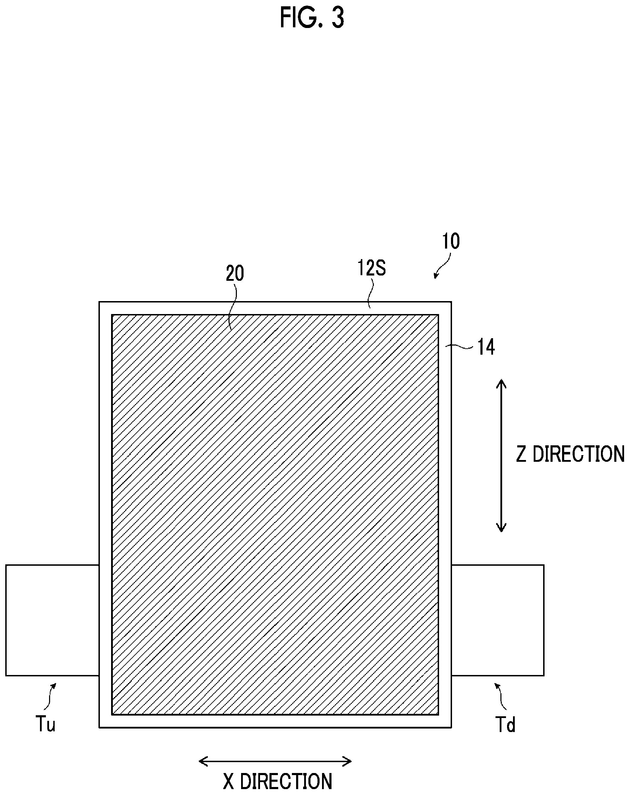

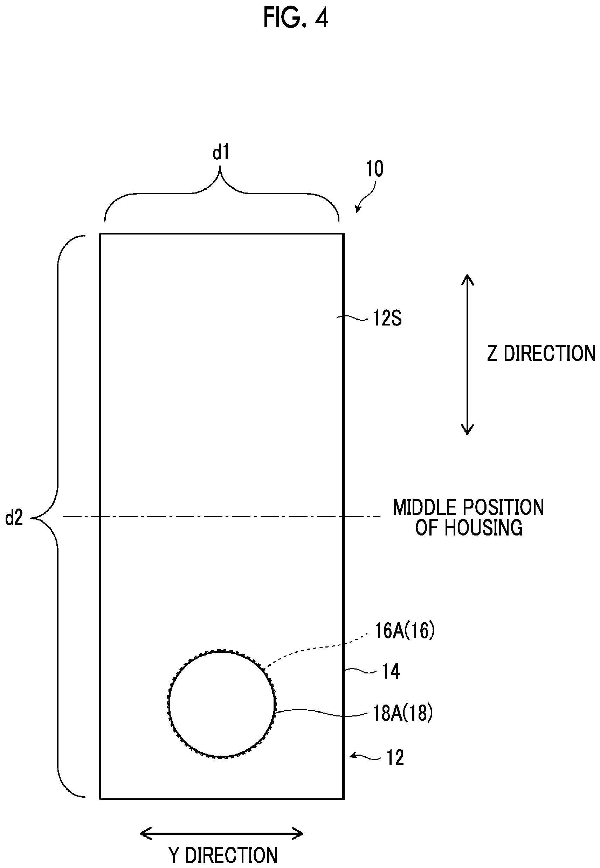

A configuration of a silencer 10 for a ventilation passage according to an embodiment of the present invention (hereinafter, referred to as the present embodiment) will be described with reference to Figs. 1 to 6B. Fig. 4 is a diagram showing a downstream edge surface of the silencer 10 for a ventilation passage, and an inlet opening portion 16 not appearing on the downstream edge surface is shown in Fig. 4 by a broken line.

The silencer 10 for a ventilation passage is disposed at an intermediate position on a ventilation passage provided in, for example, a device or a building. That is, the silencer 10 for a ventilation passage is installed in a state where the silencer 10 for a ventilation passage is interposed between an upstream ventilation passage Tu positioned on an upstream side of the silencer 10 for a ventilation passage and a downstream ventilation passage Td positioned on a downstream side of the silencer 10 for a ventilation passage as shown in Fig. 1. Each of the upstream ventilation passage Tu and the downstream ventilation passage Td is formed of a hose, a pipe, or the like.

As shown in Figs. 1 to 4, the silencer 10 for a ventilation passage comprises a housing 12 as a main component. Further, a sound absorbing member 30 and a pair of connecting members 40 are disposed in an internal space of the housing 12 as shown in Fig. 1. Each component of the silencer 10 for a ventilation passage will be described below.

(Housing)

The housing 12 is a box-shaped hollow body, and includes a wall 14 that surrounds the internal space of the housing 12 as shown in Fig. 1. The housing 12 has a total length in the X direction, has a height in the Y direction, and has a width in the Z direction. Further, the housing 12 of the present embodiment has the shape of a flat rectangular parallelepiped crushed in the Y direction, and includes a plurality of (specifically, six) outer wall surfaces 12S.

The shape of the housing 12 will be described. The width (a length in the Z direction) of the housing 12 is larger than the height (a length in the Y direction) of the housing 12. Specifically, with regard to the contour line of a cross section of which a normal direction is the X direction among cross sections of the housing 12, a ratio of the length of the longest side of the contour line to the length of the shortest side of the contour line is 1.2 or more. Here, the shortest side corresponds to the height of the housing 12, and the length of the shortest side is equal to a length d1 shown in Fig. 4. The longest side corresponds to the width of the housing 12, and the length of the longest side is equal to a length d2 shown in Fig. 4.

Each portion of the wall 14 is a plate having a relatively small thickness, and forms both end portions of the housing 12 in the XYZ directions. A material of the wall 14 is not particularly limited, but, for example, a metal material, a resin material, a reinforced plastic material, a carbon fiber, and the like can be used as the material of the wall 14.

Examples of the metal material include aluminum, titanium, magnesium, tungsten, iron, steel, chromium, chromium molybdenum, nichrome-molybdenum, copper, steel galvanized cold commercial (SGCC), and alloys, such as stainless steel.

Examples of the resin material include an acrylic resin, polymethyl methacrylate, polycarbonate, polyamideide, polyalylate, polyetherimide, polyacetal, polyetheretherketone, polyphenylene sulfide, polysulfone, polyethylene terephthalate, polybutylene terephthalate, polyimide, an ABS resin (a copolymer synthetic resin of acrylonitrile, a flame-retardant ABS resin, butadiene, and styrene), polypropylene, triacetylcellulose (TAC), polypropylene (PP), polyethylene (PE), polystyrene (PS), an acrylate styrene acrylonitrile (ASA) resin, a polyvinyl chloride (PVC) resin, and a polylactic acid (PLA) resin.

Examples of the reinforced plastic material include carbon fiber reinforced plastics (CFRP) and glass fiber reinforced plastics (GFRP).

Further, natural rubber, chloroprene rubber, butyl rubber, ethylene propylene diene rubber (EPDM), silicone rubber, and rubbers including a crosslinking structure thereof can be further used as the material of the wall 14.

For example, a plurality of (specifically, six) plates are disposed in a box shape and the plates adjacent to each other are joined to each other, so that the wall 14 is formed. Alternatively, in a case where the wall 14 is divided into two fragments to be fragmented, each fragment may be formed using injection molding or the like and the fragments may be combined with each other to form the wall 14. Further, each portion of the wall 14 forms a flat plate, and two portions of the wall 14 disposed at positions facing each other are arranged in parallel. Furthermore, the outer wall surfaces 12S (XZ planes), which are positioned at both ends of the housing 12 in the Y direction, among the outer wall surfaces 12S of the housing 12 formed of the outer surfaces of the wall 14 are surfaces having the largest area among the outer wall surfaces 12S, and will be referred to as largest outer wall surfaces in the following description. The outer wall surfaces 12S of the housing 12 include one or more portions that form a plane (more specifically, a flat surface), including the largest outer wall surfaces.

Furthermore, each portion of the wall 14 is made of the same material in the present embodiment. However, the present invention is not limited thereto, and a part of the wall 14 (for example, a vibration portion 20 to be described later) may be made of a material different from the material of a peripheral portion thereof. Alternatively, a part of the wall 14, for example, the vibration portion 20 may be made of the same material as the peripheral portion thereof, but may have a thickness different from the thickness of the peripheral portion thereof.

An inlet opening portion 16 is provided at one end portion of the wall 14 in the X direction, and an outlet opening portion 18 is provided at the other end portion thereof. That is, the internal space of the housing 12 forms a part of the ventilation passage, and air (wind) flowing into the housing 12 through the inlet opening portion 16 flows out of the housing 12 through the outlet opening portion 18. In this respect, the X direction corresponds to a direction in which air flows in the housing

The inlet opening portion 16 and the outlet opening portion 18 are holes penetrating the wall 14 in the X direction, and communicate with the internal space of the housing 12. Further, as shown in Fig. 1, the upstream ventilation passage Tu is connected to the inlet opening portion 16 and the downstream ventilation passage Td is connected to the outlet opening portion 18. Each of the inlet opening portion 16 and the outlet opening portion 18 may penetrate the wall 14 in parallel to the X direction or may penetrate the wall 14 to be inclined with respect to the X direction.

Here, a boundary position between the inlet opening portion 16 and the internal space of the housing 12, that is, an inner opening end of the inlet opening portion 16 corresponds to an inlet opening 16A. As shown in Fig. 1, the inlet opening 16A is formed in an upstream edge surface (in other words, one edge surface in the X direction) of an inner wall surface of the housing 12. In other words, the inlet opening 16A is positioned on an upstream side (one end side) of a part of the ventilation passage that is formed by the internal space of the housing 12. Further, a boundary position between the outlet opening portion 18 and the internal space of the housing 12, that is, an inner opening end of the outlet opening portion 18 corresponds to an outlet opening 18A. As shown in Fig. 1, the outlet opening 18A is formed in a downstream edge surface (in other words, the other edge surface in the X direction) of the inner wall surface of the housing 12. In other words, the outlet opening 18A is positioned on a downstream (the other end side) of a part of the ventilation passage that is formed by the internal space of the housing 12.

In the present embodiment, openings formed in the housing 12, more specifically, in the inner wall surface of the housing 12 are only the inlet opening 16A and the outlet opening 18A.

The shape (contour shape) of each of the inlet opening 16A and the outlet opening 18A is not particularly limited, but may be, for example, a circular shape, an elliptical shape, a polygonal shape, such as a triangular shape or a quadrangular shape, or an indefinite shape. Further, the size of each of the inlet opening 16A and the outlet opening 18A may be the same or different.

Furthermore, as shown in Figs. 1 and 4, each of the inlet opening portion 16 including the inlet opening 16A and the outlet opening portion 18 including the outlet opening 18A is provided at a position closer to an end of the housing 12 than to the middle of the housing 12 in the Z direction. That is, the inlet opening portion 16 and the outlet opening portion 18 are provided not in the middle portion of the housing 12 but at positions close to an end of the housing 12 in a longitudinal direction of the housing 12.

A surface (edge surface), which is farthest from the inlet opening portion 16 and the outlet opening portion 18 in the Z direction, of the inner wall surface of the housing 12 will be referred to as "top surface" in the following description. Further, a surface (edge surface), which is opposite to the top surface in the Z direction, of the inner wall surface of the housing 12 will be referred to as "rear surface".

Furthermore, in the present embodiment, as seen from Figs. 1 to 4, a range in which the inlet opening 16A is present and a range in which the outlet opening 18A is present in the Y direction and the Z direction overlap with each other. Here, a range in which each opening is present in the Y direction and the Z direction is a range in which each opening is present on an imaginary plane (YZ plane) of which a normal direction is the X direction in a case where each opening is projected on the imaginary plane. Since the range in which the inlet opening 16A is present and the range in which the outlet opening 18A is present overlap with each other in this way, ventilation performance is improved and air (wind) smoothly flows from the inlet opening 16A toward the outlet opening 18A.

From the viewpoint of improving ventilation performance, it is preferable that the range in which the inlet opening 16A is present and the range in which the outlet opening 18A is present completely coincide with each other in a case where the inlet opening 16A and the outlet opening 18A have the same size. Further, in a case where the inlet opening 16A and the outlet opening 18A have different sizes, it is preferable that a range in which a smaller opening is present is within a range in which a larger opening is present as shown in Fig. 4. However, the present invention is not limited thereto, and the range in which the inlet opening 16A is present and the range in which the outlet opening 18A is present may partially overlap with each other. Furthermore, due to restrictions on the design of the ventilation passage, or the like, the range in which the inlet opening 16A is present and the range in which the outlet opening 18A is present may be separated (shifted) from each other without overlapping with each other in at least one of the Y direction or the Z direction.

In addition, in the present embodiment, the housing 12 is provided with a vibration portion 20 that is adapted to vibrate in response to sound entering the housing 12. The vibration portion 20 is formed of a part of the wall 14, specifically, a portion of which an outer wall surface is a flat surface. In the present embodiment, a portion forming the largest outer wall surface forms the vibration portion 20. However, a portion of the housing 12 forming the vibration portion 20 may be a portion forming the outer wall surface 12S other than the largest outer wall surface.

In the wall 14, the vibration portion 20 is continuous with a peripheral portion of the vibration portion 20. The fact that the vibration portion 20 is continuous with the peripheral portion means that the vibration portion 20 and the peripheral portion are integrated with each other. A boundary between the vibration portion 20 and the peripheral portion may be provided with a seam or may have a seamless structure without a seam. However, in a case where there is no seam between the vibration portion 20 and the peripheral portion, higher strength and higher durability can be obtained in the housing 12 as compared to a case where there is a seam (that is, a welded portion or an adhesion portion).

From the viewpoint that the vibration portion 20 easily vibrates to increase an effect caused by natural vibration, a structure in which the peripheral portion of the vibration portion 20 can be regarded as a fixed end is preferable. Here, since corners (bent portions) of the housing 12 are regarded as portion not vibrating as fixed ends, a structure in which the entire surface surrounded by corners in the wall 14 of the housing 12 functions as the vibration portion 20 is desirable.

Further, the vibration portion 20 may have a thickness smaller than a thickness of the peripheral portion to be capable of easily vibrating. Specifically, it is preferable that the thickness of the vibration portion 20 is set to $0.01 \times t$ to $0.46 \times t$ in a case where the thickness of the peripheral portion is denoted by t. In a case where the vibration portion 20 is excessively thinner than the peripheral portion, the structural strength of the housing 12 is excessively low. For this reason, it is desirable that the thickness of the vibration portion 20 is set to about 1/100 even if the thickness of the vibration portion 20 is reduced.

Furthermore, in a case where the material of a plate is the same (exactly, young's modulus is the same), the stiffness of the plate is changed in proportion to the cube of a thickness. For this reason, in a case where the thickness of the vibration portion 20 is set to 0.46 or less times the thickness of the peripheral portion, the stiffness of the peripheral portion can be increased to about 10 times the stiffness of the vibration portion 20. As a result, natural vibration can be easily obtained.

In addition, the vibration portion 20 may be a portion forming at least one outer wall surface 12S of the six outer wall surfaces 12S of the housing 12, or the vibration portion 20 may be provided over two or more surfaces.

Further, the vibration portion 20 consists of a flat plate in the present embodiment, but the present invention is not limited thereto. The vibration portion 20 may be formed of a plate that is curved in an arch shape. However, since the curved vibration portion 20 is less likely to vibrate, the vibration portion 20 having a flat shape is more preferable.

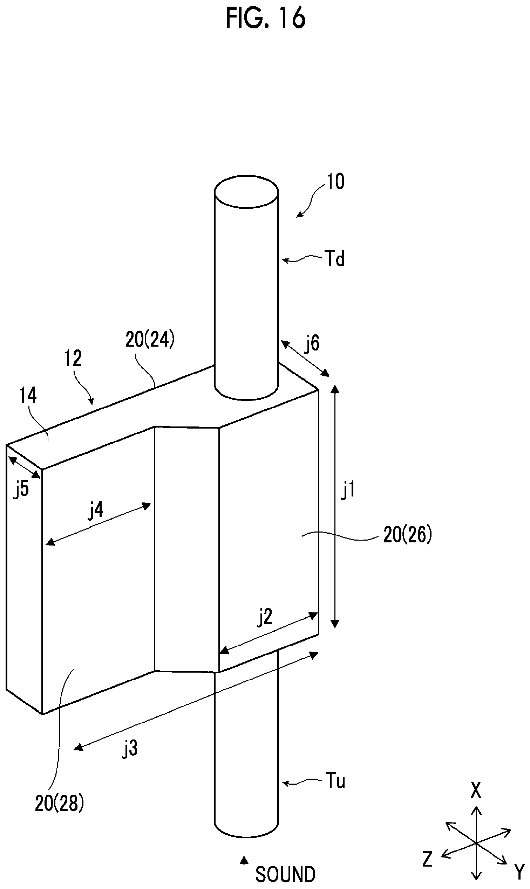

Furthermore, a portion of the housing 12 forming the vibration portion 20 is one of portions forming the largest outer wall surfaces in the present embodiment, but the present invention is not limited thereto. The housing 12 may be provided with a plurality of vibration portions 20 (see Figs. 16, 19B, and 20B).

The vibration portion 20 is adapted to vibrate at a natural frequency thereof. The natural frequency of the vibration portion 20 is determined depending on the structure (the dimensions, the shape of an outer edge, and the like) and material of the vibration portion 20, the position of the vibration portion 20 in the housing 12, a method of fixing the vibration portion 20, a method of supporting the vibration portion 20, and the like. The natural frequency of the vibration portion 20 can be specified using publicly known natural frequency analysis or natural frequency calculation.

For example, vibration is applied using an impulse hammer, such as "GK-3100" manufactured by Ono Sokki Co., Ltd., and vibration is measured with an acceleration detector and is converted into a frequency using a fast fourier transform (FFT) analyzer, so that an actually measured value of a natural frequency can be obtained as a frequency response. In a case where a measurement is made at a plurality of points at this time, a vibration mode can also be analyzed using actual measurement. Further, a tester provided as a set, such as "natural frequency measurement system CAT-SA02 NF" manufactured by RION Co., Ltd., may be used. Many JIS standards for a procedure for actually measuring a natural frequency are also determined for each industry, and a natural frequency can be obtained according to, for example, JISG0602, JISB0908, and JISC60068-2-81, and the like.

Natural frequency calculation can be performed using general structural dynamics simulation. Specifically, in a case where the size of a material, physical properties (young's modulus, density, Poisson's ratio, and the like) of a material, and surrounding constraint conditions are input to various types of commercial software, such as COMSOL, ANSYS, and Abaqus, or self-made software, a natural frequency can be calculated.

Further, in a case where the lowest-order first natural frequency among natural frequencies of the vibration portion 20 is denoted by f1 (unit: Hz) in the present embodiment, the first natural frequency f1 satisfies the following expression (1).

$$f1 < c/(2 \times L) \ ... \ \text{Expression (1)}$$

In Expression (1), c denotes a sound speed (unit: m/s). Further, L denotes a distance (unit: m) between the inlet opening 16A and the outlet opening 18A, specifically, a distance between the position of a geometric center of the inlet opening 16A and a position of a geometric center of the outlet opening 18A. In a case where each opening has the shape of a circle, the position of the geometric center of each opening is the position of the center of the circle. The distance L is a distance between the openings, in other words, a length of a path along which an air stream flows in the housing 12.

The inventor of the present invention has found that sound having a low frequency band can be efficiently deadened using the vibration of the vibration portion 20 in a case where Expression (1) is satisfied. Here, a right side of Expression (1), that is, a frequency corresponding to $c/(2 \times L)$ is a frequency of sound of which a half of a wavelength $\lambda$ (unit: m), that is, $\lambda/2$ corresponds to the distance L. Further, a frequency corresponding to $c/(2 \times$

L) corresponds to a frequency of resonance in the housing 12 in the X direction (ventilation direction), and will also be referred to as a specific resonance frequency fr in the following description.

Furthermore, in a case where the first natural frequency f1 of the vibration portion 20 satisfies the following expression (2), sound having a frequency lower than a frequency of sound of which a quarter of a wavelength λ (unit: m), that is, λ/4 corresponds to the distance L can be efficiently deadened.

$$f1 < c/(4 \times L) \ ... \ \text{Expression (2)}$$

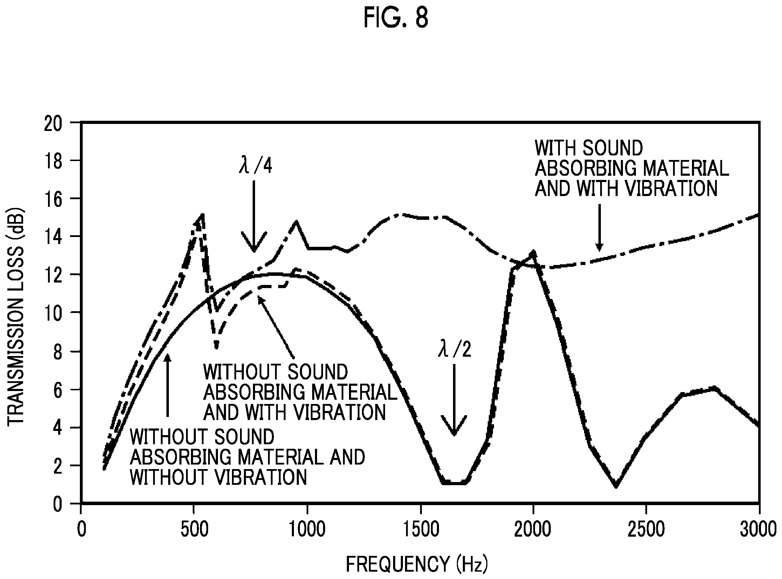

A frequency band of which sound can be deadened in a case where the vibration portion 20 vibrates at the first natural frequency f1 satisfying Expression (1) or (2) is 2400 Hz or less, specifically, 1700 Hz or less (see Fig. 8).

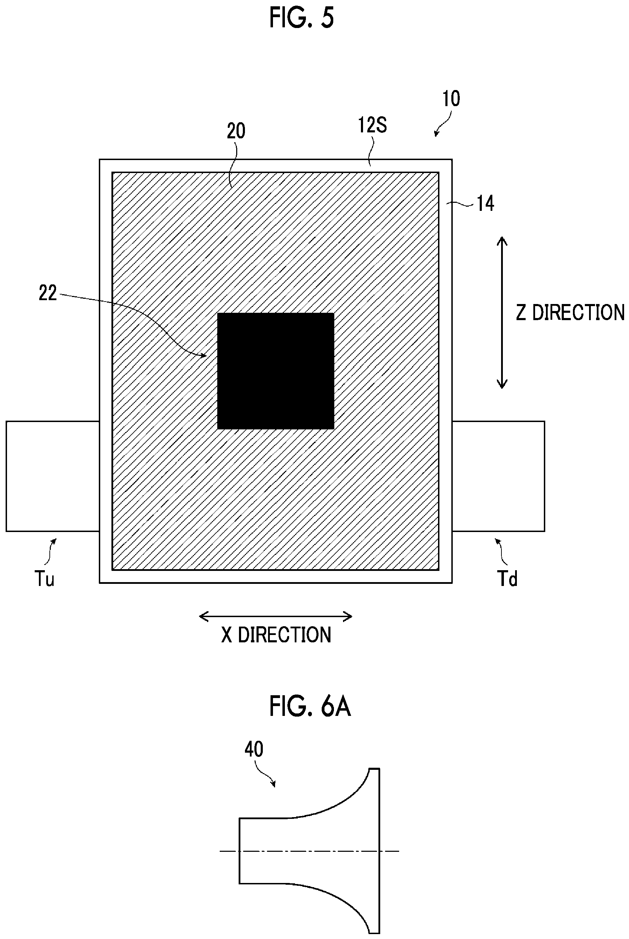

As shown in Fig. 5, a weight 22 may be mounted on the surface of the vibration portion 20 to adjust the first natural frequency f1 of the vibration portion 20. In a case where such a weight 22 is mounted, the first natural frequency f1 can be further lowered. The weight 22 may be made of the same material as the material of the vibration portion 20, that is, the wall 14, or may be made of a different from the material of the wall 14. Further, the size of the weight 22, the number of weights 22, and a position at which the weight 22 is mounted on the vibration portion 20 are not particularly limited. Furthermore, for example, a fixing protrusion (specifically, a screwing protrusion, or the like), a convex screwing structure, and the like mounted on the housing 12 can also be used as the weight 22.

(Sound absorbing member)

The sound absorbing member 30 is housed in the housing 12 as shown in Fig. 1, and absorbs high-frequency sound entering the housing 12. A sound absorbing material that converts sound energy into thermal energy to absorb sound can be used as the sound absorbing member 30 as appropriate. Examples of the sound absorbing material include a porous sound absorbing material, specifically, a foaming body, a foaming material, and a nonwoven fabric-based sound absorbing material. Specific examples of the foaming body and the foaming material include foaming urethane foam, such as CALMFLEX F manufactured by INOAC CORPORATION and urethane foam manufactured by Hikari Co., Ltd., flexible urethane foam, a ceramic particle sintered material, phenol foam, melamine foam, a polyamide foam, and the like. Specific examples of the nonwoven fabric-based sound absorbing material include a microfiber nonwoven fabric such as Thinsulate manufactured by 3M Company, and a polyester nonwoven fabric (including a two-layer fabric that includes a high-density thin nonwoven fabric provided on a surface side and a low-density nonwoven fabric provided on a back side) such as White Kyuon manufactured by TOKYO Bouon and QonPET manufactured by Bridgestone KBG Co.,Ltd., a plastic nonwoven fabric such as an acrylic fiber nonwoven fabric, a natural fiber nonwoven fabric such as wool and felt, a metal nonwoven fabric, a glass nonwoven fabric, and the like.

In addition to the examples described above, various sound absorbing materials, such as a sound absorbing material consisting of a material including a minute amount of air (specifically, a sound absorbing material consisting of glass wool, rock wool, and nanofiber-based fiber), can be used as the sound absorbing material as the sound absorbing member 30. Examples of the nanofiber-based fiber include silica nano fiber and acrylic nanofiber, such as XAI manufactured by Mitsubishi Chemical Corporation.

Moreover, a sound absorbing body that consists of a plate or a film in which innumerable through-holes having a diameter of about 100 μm are formed, such as a micro perforated plate, can be used as the sound absorbing member 30. In this case, sound can be absorbed by the sound absorbing body and a rear space formed on the rear side of the sound absorbing body. Examples of the micro perforated plate include a micro perforated plate made of aluminum, such as SUONO manufactured by DAIKEN CORPORATION, a micro perforated plate made of a vinyl chloride resin, such as DI-NOC manufactured by 3M Company, and the like. Further, another sound absorbing material may be disposed in the rear space, and a plurality of sound absorbing members 30 may be used in combination.

The sound absorbing member 30 can be considered in other cases. For example, the sound absorbing member 30 may be formed of a plate-like body or a film-like body that resonates in a case where sound having a frequency close to a resonance frequency is incident thereon, and may convert sound energy into thermal energy via the internal loss of the plate or the film to absorb sound. Further, the sound absorbing member 30 may be a resonator-type sound absorbing structure consisting of a perforated plate. In a case where sound having the same frequency as a resonance frequency collides with the sound absorbing member 30, air corresponding to hole portions may vibrate and the sound absorbing member 30 may convert sound energy into thermal energy via a viscosity loss at that time. Furthermore, the sound absorbing structure and another sound absorbing material may be disposed and a plurality of sound absorbing members 30 may be used in combination.

For the reason that ventilation performance in the housing 12 is to be ensured in the housing 12, the sound absorbing member 30 is disposed to avoid the range in which the inlet opening 16A is present and the range in which the outlet opening 18A is present in the Y direction and the Z direction. Simply, the sound absorbing member 30 is disposed at a position outside the range in which the inlet opening 16A is present and is disposed at a position outside the range in which the outlet opening 18A is present in the Y direction and the Z direction. Further, the sound absorbing member 30 may have a tubular shape. In that case, a space positioned in the sound absorbing member 30, that is, the inside of the tube may form a part of the ventilation passage.

Furthermore, in order to ensure ventilation performance in the housing 12 while maintaining sound absorption performance in a high frequency band, an occupancy ratio of the sound absorbing member 30 is preferably 80% or more, more preferably 90% or more, and particularly preferably 95%. The occupancy ratio of the sound absorbing member 30 is a ratio (volume ratio) of a region, which is occupied by the sound absorbing member 30, to the volume of a space, which excludes a flow channel portion 50 (see Fig. 1) in the housing 12, of the internal space of the housing 12. Here, the flow channel portion 50 is a space, which forms a part of the ventilation passage, of the internal space of the housing 12 and is a space that is connected from the inlet opening 16A to the outlet opening 18A on a straight pipe in the X direction. Further, it is preferable that the flow channel portion 50 is open (is not blocked by the sound absorbing member or the like) in the housing 12. However, as long as the ventilation passage is not blocked even in a configuration in which the sound absorbing member 30 is disposed in the middle of the flow channel portion 50, the silencer 10 for a ventilation passage can be used as the silencer for a ventilation passage according to the embodiment of the present invention.

In addition, in a case where a sound absorbing material is used as the sound absorbing member 30, it is preferable that a flow resistivity of the sound absorbing material is in a range of 1000 (Pa×s/m$^2$) to 100000 (Pa×s/m$^2$). Further, in a case where the structure of the sound absorbing member 30 is a structure in which a plurality of layers are laminated, the flow resistance of the entire structure can be measured and a flow resistivity can be calculated from the thickness of the entire structure.

(Connecting member)

The pair of connecting members 40 is disposed in the internal space of the housing 12 as shown in Fig. 1, one connecting member 40 (hereinafter, referred to as an upstream connecting member 42) is connected to the inlet opening 16A, and the other connecting member (hereinafter, referred to as a downstream connecting member 44) is connected to the outlet opening 18A.

Each of the upstream connecting member 42 and the downstream connecting member 44 is a cylindrical member, and specifically has the shape of a truncated cone (that is, a tapered shape) of which an outer diameter and an inner diameter are gradually changed like a horn.

The upstream connecting member 42 is mounted on the inner wall surface of the housing 12 in a state where an end, which has a smaller diameter, of the upstream connecting member 42 faces the inlet opening 16A. Likewise, the downstream connecting member 44 is mounted on the inner wall surface of the housing 12 in a state where an end, which has a smaller diameter, of the downstream connecting member 44 faces the outlet opening 18A. In other words, the area of a cross section (specifically, an area surrounded by the outer edge of the cross section) of each connecting member 40 of which a normal direction is the X direction is increased as a distance from the opening to which each connecting member 40 is connected in the X direction is increased.

A connecting member-side opening portion 46 connected to the inlet opening 16A is provided on an inner side of the upstream connecting member 40 as shown in Fig. 1. The size of the connecting member-side opening portion 46 is increased as a distance from the inlet opening 16A in the X direction is increased. Further, a connecting member-side opening portion 48 connected to the outlet opening 18A is provided on an inner side of the downstream connecting member 40. The size of the connecting member-side opening portion 48 is increased as a distance from the outlet opening 18A in the X direction is increased.

It is preferable that an opening of the upstream connecting member 42 facing the inlet opening 16A has the same shape as the inlet opening 16A and has substantially the same opening area as the inlet opening 16A. It is preferable that an opening of the downstream connecting member 44 facing the outlet opening 18A has the same shape as the outlet opening 18A and has substantially the same opening area as the outlet opening 18A.

Each connecting member 40 may be made of the same material as the wall 14 of the housing 12, or may be made of the same material as the upstream ventilation passage Tu and the downstream ventilation passage Td. Further, a method of mounting each connecting member 40 is not particularly limited. For example, an edge surface of each connecting member 40 may be joined to the inner wall surface of the housing 12 and fixed by an adhesive or fasteners, such as screws. Alternatively, each connecting member 40 may be connected to the upstream ventilation passage Tu or the downstream ventilation passage Td.

The shape of each connecting member 40 may be a shape in which a peripheral wall is curved in a convex shape toward a central axis of the connecting member 40 as shown in Fig. 6A.

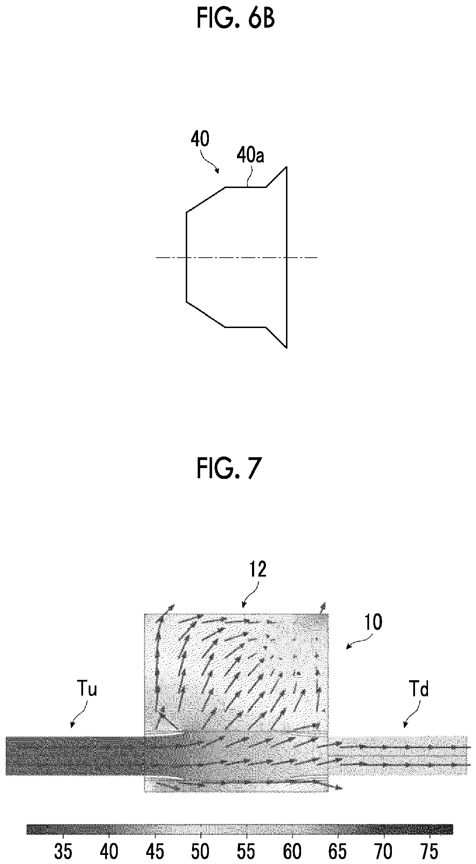

Further, each connecting member 40 may comprise a same-diameter portion 40a which is provided at an intermediate portion of the connecting member 40 in a direction of a central axis of the connecting member 40 (X direction) and of which a diameter is constant without being changed as shown in Fig. 6B. Furthermore, the external shape of each connecting member 40 is not limited to a cylindrical shape, and may be a prismatic shape.

Moreover, the connecting members 40 are connected to both the inlet opening 16A and the outlet opening 18A in the present embodiment, but the present invention is not limited thereto. The connecting member 40 may be connected to only any one of the inlet opening 16A or the outlet opening 18A. Further, both the inlet opening 16A and the outlet opening 18A may not be provided with the connecting members 40.

[Effect of deadening sound using silencer for ventilation passage according to embodiment of present invention]

The silencer 10 for a ventilation passage deadens sound in the ventilation passage via the vibration of the vibration portion 20, acoustic resonance in the housing 12, resonance in the rear space of the connecting members 40, and the absorption of sound caused by the sound absorbing member 30.

Specifically, in a case where $(2n + 1) \times \lambda/4$ (n is a natural number) coincides with a distance between the inner wall surface of the housing 12 and the opening (specifically, the inlet opening 16A or the outlet opening 18A) in the silencer 10 for a ventilation passage, acoustic resonance occurs in the housing 12 at a frequency of the wavelength $\lambda$. For convenience, this resonance will be referred to as "$\lambda/4$ resonance". The $\lambda/4$ resonance is, for example, resonance in the Z direction in Fig. 4. Fig. 7 shows calculation results of a finite element method for an acoustic intensity vector and a sound energy distribution in the housing 12 in a case where $\lambda/4$ resonance occurs. As seen from Fig. 7, sound energy is satisfactorily transmitted not in the flow channel portion (ventilation passage) but in a direction spreading inside the housing 12 at the time of $\lambda/4$ resonance, so that sound can be deadened in the housing 12.

In the present embodiment, the inlet opening portion 16 and the outlet opening portion 18 are present at positions close to an end of the housing 12 in the longitudinal direction of the housing 12 (the Z direction) and are farther from the top surface of the inner wall surface of the housing 12. Since the inlet opening portion 16 and the outlet opening portion 18 are away from the top surface as described above, a resonance frequency in $\lambda/4$ resonance can be lowered.

Further, in the silencer 10 for a ventilation passage, the vibration portion 20 vibrates at the first natural frequency f1 satisfying Expression (1) described above. Accordingly, sound having a frequency lower than the frequency of sound of which $\lambda/4$ corresponds to the distance L is emitted to the outside of the housing 12 due to resonance. As a result, low-frequency sound can be deadened as shown in Fig. 8. Figs. 8 and 10 to 15 show graphs showing sound-deadening characteristics of the silencer for a ventilation passage, a horizontal axis represents a frequency (unit: Hz), and a vertical axis represents a transmission loss (unit: dB). Further, Fig. 8 shows a graph in a case of "without sound absorbing material and without vibration", a graph in a case of "without sound absorbing material and with vibration", and a graph in a case of "with sound absorbing material and with vibration".

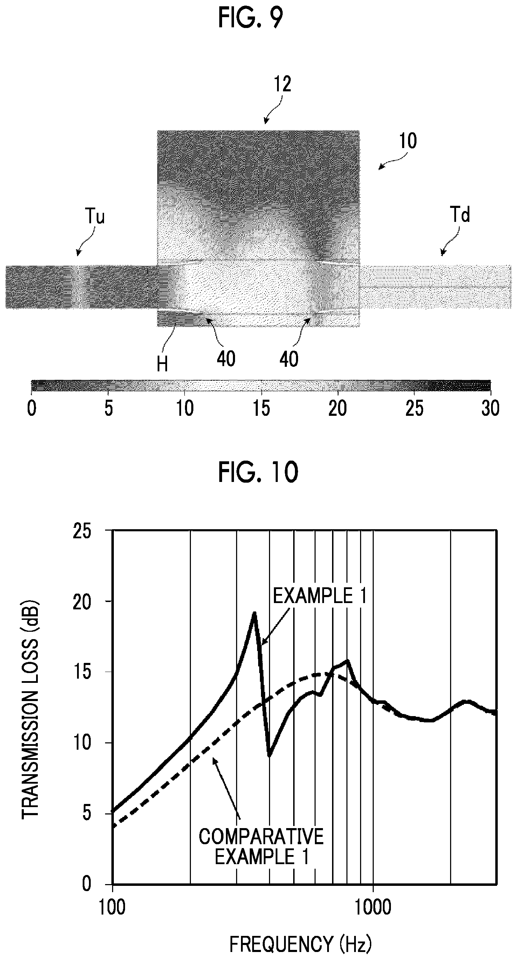

Furthermore, the rear space of the connecting members 40 (specifically, the upstream connecting member 42) acts as a type of resonator in the silencer 10 for a ventilation passage, so that sound resonates in the rear space H. The rear space H is a space formed between the rear surface, which is close to the connecting members 40, of the inner wall surface of the housing 12 and the connecting members 40, and is reduced in size toward a middle position of the housing 12 in the X direction (see Fig. 1). Accordingly, the rear space H (specifically, the rear space H of the upstream connecting member 42) resonates with a principle close to that of the Helmholtz resonator as shown in Fig. 9. Sound having the resonance frequency can be deadened due to resonance in such a rear space H.

Moreover, in the silencer 10 for a ventilation passage, sound is absorbed by the sound absorbing member 30 provided in the housing 12. Accordingly, as shown in Fig. 8, sound can be effectively deadened (absorbed) at a frequency higher than the frequency of sound of which $\lambda/2$ corresponds to the distance L. As seen from Fig. 8, the effect of the sound absorbing member 30 is reduced at a frequency lower than the frequency of sound of which $\lambda/4$ corresponds to the distance L.

Meanwhile, as the general silencer 10 for a ventilation passage is reduced in size, it is difficult for the general silencer 10 for a ventilation passage to deaden sound having a low frequency band. On the other hand, in a case where the distance L is lengthened, the frequency band of sound to be deadened can be lowered. However, in a case where the distance L is lengthened, the housing 12 is increased in size. For this reason, it is necessary to ensure a larger installation space for the silencer 10 for a ventilation passage. On the other hand, in the silencer 10 for a ventilation passage according to the present embodiment, the frequency band of sound to be deadened can be lowered without a change in the distance L using the deadening of sound via the vibration of the vibration portion 20.

As described above, according to the silencer 10 for a ventilation passage of the present embodiment, it is possible to deaden sound over a wide range from sound having a low frequency band to sound having a high frequency band even though the size of the housing 12 is relatively compact. That is, since a resonance mode not depending on the size of the internal space of the housing 12 is used in the present embodiment, broad sound deadening can be obtained using the deadening of sound caused by the housing 12 and the sound deadening member using the sound absorbing member 30 together.

[Modification example of internal structure of silencer for ventilation passage]

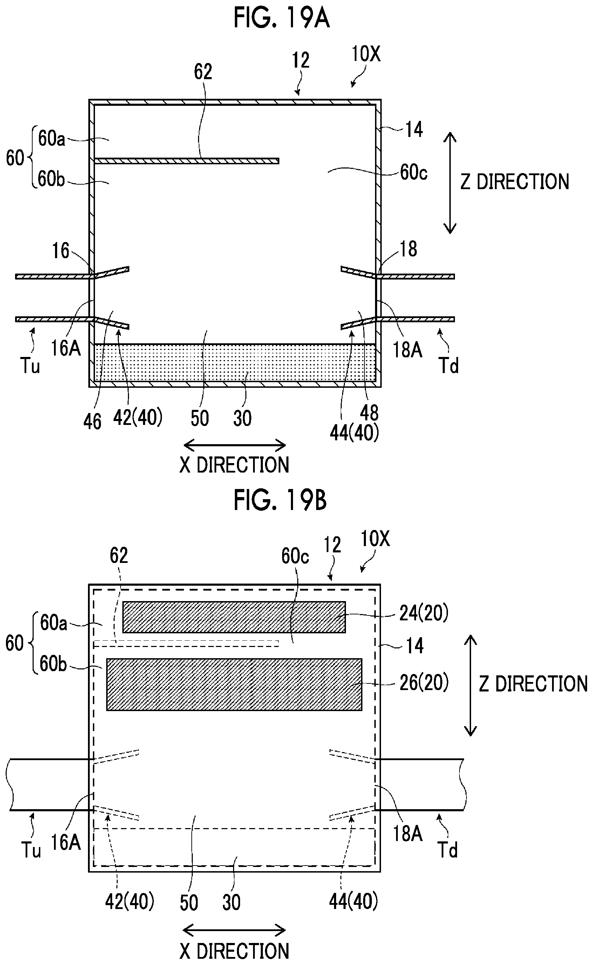

An internal structure of the silencer for a ventilation passage according to the embodiment of the present invention is not limited to the example shown in Fig. 1, and examples thereof include an example shown in Fig. 19A. In a silencer 10X for a ventilation passage shown in Fig. 19A, a sound absorbing member 30 is disposed in a region of an internal space of a housing 12 on a side where the connecting members 40 are provided in the Z direction. More specifically, the panel-like sound absorbing member 30 is disposed along an edge surface of the inner wall surface of the housing 12 on a side where the connecting members 40 are provided in the Z direction. Each of the upstream and downstream connecting members 40 is disposed adjacent to the sound absorbing material 30 in the Z direction as shown in Fig. 19A.

In the internal structure shown in Fig. 19A, a range in which the inlet opening 16A is present and a range in which the outlet opening 18A is present in the Y direction and the Z direction overlap with each other.

Further, in the internal structure shown in Fig. 19A, a rear space 60 is provided in the internal space of the housing 12 on a side opposite to the sound absorbing member 30 in the Z direction. Furthermore, a partition member 62 for partitioning the rear space 60 is disposed in the rear space 60. In the example shown in Fig. 19A, the partition member 62 is a flat plate-like member and partitions the rear space 60 into two spaces in the Z direction. A first space 60a, which is farther from the sound absorbing member 30, of the two spaces has a short length in the Z direction and a small volume as compared to a second space 60b that is closer to the sound absorbing member 30.

Further, the partition member 62 extends straight in the X direction from an upstream edge surface of the inner wall surface of the housing 12, and a distal end thereof is separated from a downstream edge surface of the inner wall surface of the housing 12. That is, a relatively wide gap is formed between the distal end 62 of the partition member and the inner wall surface (specifically, the downstream edge surface) of the housing 12. This gap corresponds to a communication portion 60c that allows the first space 60a and the second space 60b to communicate with each other.

Further, the first space 60a, which has a smaller volume, of the two spaces partitioned by the partition member 62 forms a resonance space that absorbs sound via resonance. Specifically, the first space 60a functions as an air-column resonator since a standing wave is generated in a space including the communication portion 60c (gap). The air-column resonator can match the resonance frequency thereof to the frequency of sound to be deadened to absorb the sound having the frequency.

In the silencer 10X for a ventilation passage having the internal configuration described above, portions of the housing 12 adjacent to the rear space 60 in the X and Y directions form vibration portions as shown in Fig. 19B. More specifically, a portion, which is adjacent to the first space 60a, of a portion, which forms the largest outer wall surface, of the wall 14 of the housing 12 forms a first vibration portion 24, and a portion thereof, which is adjacent to the second space 60b, forms a second vibration portion 26.

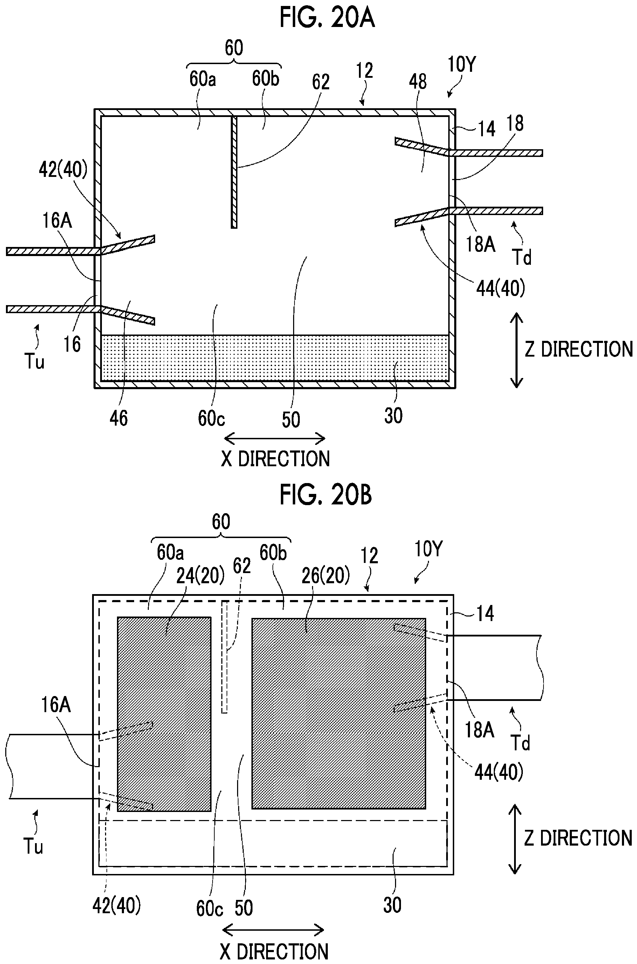

In Fig. 19B and Fig. 20B to be described later, devices provided in the housing 12 are shown by a broken line in order to show a positional relationship between each vibration portion and the devices provided in the housing 12.

The range in which the inlet opening 16A is present and the range in which the outlet opening 18A is present in the Y direction and the Z direction overlap with each other in the configuration shown in Figs. 19A and 19B, but the present invention is not limited thereto. That is, as shown in Fig. 20A, a range in which the inlet opening 16A is present and a range in which the outlet opening 18A is present may be separated from each other without overlapping with each other in the Y direction or the Z direction.

In a silencer 10Y for a ventilation passage shown in Fig. 20A, the range in which the inlet opening 16A is present and the range in which the outlet opening 18A is present are separated from each other in the Z direction. Further, a rear space 60 of the internal space of the housing 12 positioned on a side opposite to the sound absorbing member 30 in the Z direction is partitioned into two spaces, which are arranged in the X direction, by, for example, a partition member 62 extending in the Z direction. The partition member 62 extends straight from an end, which is opposite to the sound absorbing member 30 in the Z direction, of the inner wall surface of the housing 12 toward the sound absorbing member 30, and a distal end thereof is separated from the sound absorbing member 30. Furthermore, a first space 60a, which is positioned closer to an upstream side, of the two spaces has a short length in the X direction and a small volume as compared to a second space 60b that is positioned closer to a downstream side. Moreover, a communication portion 60c consisting of a relatively wide gap is formed between the distal end 62 of the partition member and the sound absorbing member 30.

Further, even in the silencer 10Y for a ventilation passage shown in Fig. 20A, the first space 60a, which has a smaller volume, of the two spaces partitioned by the partition member 62 forms a resonance space that absorbs sound via resonance. That is, the first space 60a functions as an air-column resonator since a standing wave is generated in a space including the communication portion 60c (gap).

In the silencer 10Y for a ventilation passage having the internal configuration described above, as shown in Fig. 20B, a portion, which is adjacent to the first space 60a, of a portion, which forms the largest outer wall surface, of the wall 14 of the housing 12 forms a first vibration portion 24, and a portion thereof, which is adjacent to the second space 60b, forms a second vibration portion 26.

Examples

Hereinafter, the present invention will be more specifically described with reference to examples. Materials, the amounts and proportions of the materials to be used, details and procedures of treatments, and the like described in the following examples can be changed as appropriate without departing from the scope of the present invention. Accordingly, the scope of the present invention should not be interpreted to be limited by the following examples.

In addition, "parts" is on a mass basis unless otherwise specified.

(Example 1)

A housing made of an acrylonitrile butadiene styrene (ABS) resin was produced using a 3D printer. The housing had a rectangular parallelepiped shape and included a wall having a thickness of 2 mm, and a total length, a height, and a width (lengths in the respective XYZ directions) of the housing are 110 mm, 50 mm, and 130 mm, respectively. That is, with regard to the contour line of a cross section of the housing of which a normal direction was the X direction, a ratio of the length of the longest side to the length of the shortest side was set to 2.6:1.

Further, the housing included an inlet opening portion and an outlet opening portion, and a ventilation passage consisting of a hose having an inner diameter of 28 mm was connected to each of the opening portions. The inlet opening portion and the outlet opening portion were provided at positions shifted from a middle position of the housing in the Z direction by 28 mm.

Furthermore, QonPET (manufactured by Bridgestone KBG Co.,Ltd.) as a sound absorbing member was disposed in an internal space of the housing at a position avoiding each of the regions in which the inlet opening and the outlet opening were present. The flow resistivity of this sound absorbing member was about 8000 Rayls/m.

Further, a plate-like portion forming one surface of the housing, specifically, the largest outer wall surface (a surface having a size of 130 mm $\times$ 110 mm) was adapted to be capable of vibrating as a vibration portion. Natural vibration calculation was performed for this vibration portion using COMSOL Multiphysics. The fact that the periphery of the plate-like portion as the vibration portion is fixed and restrained was used as a precondition in the calculation. As a result of analysis, it was found that a first natural frequency f1 (resonance frequency) of the vibration portion is 358 Hz.

(Comparative Example 1)

In Comparative Example 1, the thickness of a wall of the housing was set to 20 mm and vibration in the housing was suppressed. In terms of other points, the configuration of Comparative Example 1 was the same as that of Example 1.

As result of the above-mentioned natural vibration analysis that was performed for a plate-like portion of the housing of Comparative Example 1 forming the largest outer wall surface (a surface having a size of 130 mm $\times$ 110 mm), the first natural frequency f1 of the plate-like portion was 2799 Hz.

<Measurement of sound-deadening characteristics>

A sound source was disposed on an upstream side of a silencer for a ventilation passage produced in each of Example 1 and Comparative Example 1, sound generated from the sound source was incident on the silencer for a ventilation passage, and the transmittance and reflectivity of sound incident on the silencer for a ventilation passage were measured. Measurement was performed according to a publicly known acoustic tube measurement method (specifically, ASTM E2611) with a microphone 4-terminal method using an acoustic tube having a diameter of 28 mm.

(1-transmittance-reflectivity) was defined as an absorbance and a sound absorption coefficient was obtained as an index that indicates the amount of sound deadened in the silencer for a ventilation passage. Further, a value of $10 \times \log_{10}(1/\text{transmittance})$ was obtained as a transmission loss. Measurement results of the transmission loss are shown in Fig. 10.

In Example 1, as seen from Fig. 10, a peak of a transmission loss appeared in a low frequency band, and specifically, a high transmission loss having a peak at a frequency of 355 Hz was shown. This peak frequency was substantially equal to the first natural frequency f1 (= 358 Hz) of the plate-like portion of the housing forming the vibration portion. It was found from this that the peak of a transmission loss in the low frequency band was caused by the natural vibration of the vibration portion of the housing in the silencer for a ventilation passage of Example 1. Further, since the total length (a length in the X direction) of the housing was 110 mm, a specific resonance frequency fr (= c/(2 $\times$ L)) was 1555 Hz and fr/2 (= c/(4 $\times$ L)) was 780 Hz. That is, the peak of a transmission loss caused by the natural vibration of the vibration portion occurred at a frequency less than fr/2.

On the other hand, in Comparative Example 1, as seen from Fig. 10, a steep peak did not appear in a low frequency band with regard to the measurement results of a transmission loss. The reason for this is that the first natural frequency f1 of the plate-like portion of the housing forming the largest outer wall surface is 2799 Hz, is higher than the specific resonance frequency fr, and is not present on a low frequency side.

(Example 2)

In Example 2, the width (a length in the Z direction) of the housing was set to 90 mm. That is, with regard to the contour line of a cross section of which a normal direction was the X direction among the cross sections of the housing of Example 2, a ratio of the length of the longest side to the length of the shortest side was set to 1.8:1. Further, positions where the inlet opening portion and the outlet opening portion were provided in the housing were shifted from the middle position of the housing in the Z direction by 18 mm. In terms of other points, the configuration of Example 2 was the same as that of Example 1.

As result of natural vibration analysis that was performed for a plate-like portion of the housing forming the largest outer wall surface (a surface having a size of 90 mm × 110 mm), that is, a vibration portion, the first natural frequency f1 (resonance frequency) of the plate-like portion was 521 Hz. In addition, the fact that the periphery of the plate-like portion as the vibration portion is fixed and restrained was used as a precondition in the natural vibration analysis.

(Comparative Example 2)

In Comparative Example 2, the thickness of the wall of the housing was set to 20 mm and vibration in the housing was suppressed. In terms of other points, the configuration of Comparative Example 2 was the same as that of Example 2.

As result of the natural vibration analysis that was performed for a plate-like portion of the housing of Comparative Example 2 forming the largest outer wall surface (a surface having a size of 90 mm × 110 mm), the first natural frequency f1 of the plate-like portion was 3760 Hz.

<Measurement of transmission loss in Example 2 and Comparative Example 2>

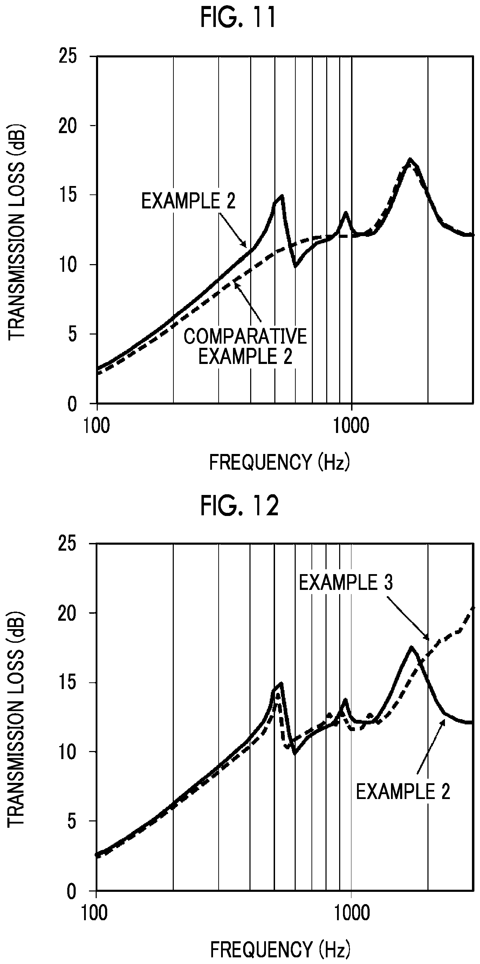

In Example 2 and Comparative Example 2, in the same manner as in Example 1 and Comparative Example 1, the transmittance and reflectivity of sound incident on the silencer for a ventilation passage were measured and a transmission loss was measured. Measurement results of the transmission loss are shown in Fig. 11.

In Example 2, as seen from Fig. 11, a peak of a transmission loss appeared in a low frequency band, and specifically, a high transmission loss was shown at a frequency of 530 Hz. This peak frequency was substantially equal to the first natural frequency f1 (= 521 Hz) of the plate-like portion of the housing forming the vibration portion. It was found from this that the peak of a transmission loss in the low frequency band was caused by the natural vibration of the vibration portion of the housing in the silencer for a ventilation passage of Example 2. Further, the peak of a transmission loss caused by the natural vibration of the vibration portion occurred at a frequency less than fr/2 (that is, less than 780 Hz).

On the other hand, in Comparative Example 2, as seen from Fig. 11, a steep peak did not appear near a frequency of 500 Hz with regard to the measurement results of a transmission loss. The reason for this is that the first natural frequency f1 of the plate-like portion of the housing forming the largest outer wall surface is 3760 Hz, is higher than the specific resonance frequency fr, and is not present on a low frequency side.

(Example 3)

In Example 3, positions where the inlet opening portion and the outlet opening portion were provided in the housing were set to the middle position of the housing in the Z direction. In terms of other points, the configuration of Example 3 was the same as that of Example 2. For this reason, the first natural frequency f1 of the plate-like portion forming the vibration portion in the housing had the same value (= 521 Hz) as that of Example 2.

Further, in Example 3, in the same manner as in Example 1, the transmittance and reflectivity of sound incident on the silencer for a ventilation passage were measured and a transmission loss was measured. Measurement results of the transmission loss are shown in Fig. 12. Fig. 12 also shows the measurement results of Example 2 for comparison.

In Example 3, as seen from Fig. 12, a peak of a transmission loss appeared near a frequency of 500 Hz as in Example 2. Further, in a case where Example 2 and Example 3 were compared with each other, a transmission loss was larger in Example 2 in a low frequency band of 900 to 1800 and a transmission loss was larger in Example 3 in a band of 1900 Hz or more. This reflected a difference in positions where the inlet opening portion and the outlet opening portion were provided in the housing, and it was found that a sound deadening effect in a low frequency band was improved in a case where each opening portion is shifted from the middle position of the housing (close to an end).

The above-mentioned points will be described in detail. In the silencers (that is, the silencers for a ventilation passage according to embodiments of the present invention) of Examples 2 and 3, λ/4 resonance occurs in the housing within a range of a distance between the inlet opening portion and the top surface of the inner wall surface of the housing. Since the sound absorbing member is disposed in the silencer, large sound absorption occurs around a frequency of λ/4 resonance, which causes a transmission loss to increase. In Example 3, the resonance frequency of λ/4 resonance was 2766 Hz in response to a distance between the center of the inlet opening and the top surface that was 31 mm. On the other hand, since the position where the inlet opening portion was provided (that is, a position where the hose was connected) was shifted from the middle position of the housing in Example 2, a distance between the center of the inlet opening and the top surface was longer than 49 mm. Further, the resonance frequency of λ/4 resonance in Example 2 was a frequency corresponding to the distance, and was specifically 1750 Hz. As a result, sound deadening performance was improved around a frequency of 1700 Hz in the silencer of Example 2, which was consistent with the fact that a transmission loss exceeding the transmission loss of the silencer of Example 3 was obtained in a low frequency band. From the above description, it is possible to adjust a frequency (resonance frequency) at which sound can be deadened by λ/4 resonance in the housing in a case where the inlet opening portion was provided at a position close to an end without being provided at the middle position of the housing in the Z direction. As a result, it is possible to obtain a high transmission loss in a low frequency band in which it is more difficult to deaden sound.

(Example 4)

In Example 4, the width (a length in the Z direction) of the housing was set to 60 mm. That is, with regard to the contour line of a cross section of which a normal direction was the X direction among the cross sections of the housing of Example 4, a ratio of the length of the longest side to the length of the shortest side was set to 1.2:1. Further, positions where the inlet opening portion and the outlet opening portion were provided in the housing were set to the middle position of the housing in the Z direction. In terms of other points, the configuration of Example 4 was the same as that of Example 1.

As result of natural vibration analysis that was performed for a plate-like portion of the housing forming the largest outer wall surface (a surface having a size of 60 mm × 110 mm), that is, a vibration portion, the first natural frequency f1 (resonance frequency) of the plate-like portion was 956 Hz. In addition, the fact that the periphery of the plate-like portion as the vibration portion is fixed and restrained was used as a precondition in the natural vibration analysis.

(Comparative Example 3)

In Comparative Example 3, the thickness of a wall of a housing was set to 20 mm and vibration in the housing was suppressed. In terms of other points, the configuration of Comparative Example 3 was the same as that of Example 4. As result of the above-mentioned natural vibration analysis that was performed for a plate-like portion of the housing of Comparative Example 3 forming the largest outer wall surface (a surface having a size of 60 mm × 110 mm), the first natural frequency f1 of the plate-like portion was 5834 Hz.

<Measurement of transmission loss in Example 4 and Comparative Example 3>

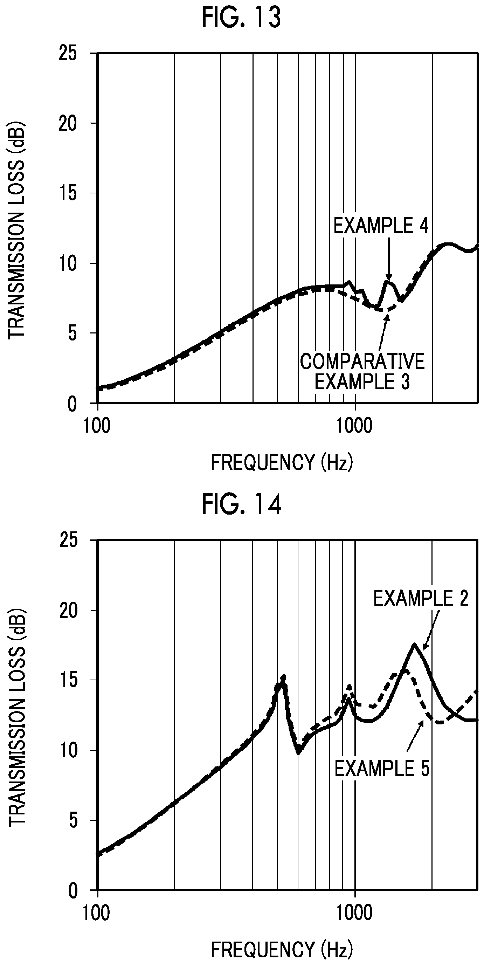

In Example 4 and Comparative Example 3, in the same manner as in Example 1 and Comparative Example 1, the transmittance and reflectivity of sound incident on the silencer for a ventilation passage were measured and a transmission loss was measured. Measurement results of the transmission loss are shown in Fig. 13.

In Example 4, as seen from Fig. 13, a peak of a transmission loss appeared at a frequency of about 950 Hz and a transmission loss higher than that of Comparative Example 3 was shown at the peak. This peak frequency was substantially equal to the first natural frequency f1 (= 956 Hz) of the plate-like portion of the housing forming the vibration portion. Accordingly, it was found that the peak was caused by the natural vibration of the vibration portion of the housing. Further, in Example 4, the specific resonance frequency fr was 1559 Hz and the first natural frequency f1 of the vibration portion was smaller than fr and larger than fr/2. That is, in Example 4, a peak of a transmission loss caused by the natural vibration of the vibration portion occurred in a range of fr/2 or more.

On the other hand, as seen from Fig. 13, a peak of a high transmission loss having appeared in Example 4 near a frequency of 950 Hz did not appear in Comparative Example 3. The reason for this is that sound deadening performance is not obtained on a low frequency side since the first natural frequency f1 of the plate-like portion of the housing forming the largest outer wall surface is 5834 Hz and is higher than the specific resonance frequency fr (= 1559 Hz).

(Example 5)

In Example 5, a connecting member was fixed to each of the inlet opening and the outlet opening on the inner wall surface of the housing. The connecting member used in Example 5 had a length of 30 mm in the X direction, and a proximal end thereof was fixed to an edge portion of each opening. Further, an opening portion (connecting member-side opening portion) of the connecting member was widened toward a distal end of the connecting member, and had a maximum opening width of 40 mm.

In terms of other points, the configuration of Example 5 was the same as that of Example 2.

Further, in Example 5, in the same manner as in Example 1, the transmittance and reflectivity of sound incident on the silencer for a ventilation passage were measured and a transmission loss was measured. Measurement results of the transmission loss are shown in Fig. 14. Fig. 14 also shows the measurement results of Example 2 for comparison.

In Example 5, as seen from Fig. 14, a peak of a transmission loss appeared at a frequency of 530 Hz as in Example 2. That is, a sound deadening effect on a low frequency side was not changed depending on whether or not the connecting members are provided. Meanwhile, the resonance frequency of λ/4 resonance determined depending on a distance to the top surface in the housing was shifted to a low frequency side since the connecting members were provided in the housing. The reason for this was that a rear space of which an inlet is narrowed was formed between the connecting member and a rear surface of the inner wall surface of the housing in the housing since the connecting members were provided. That is, since an effect of Helmholtz resonance caused by the rear space is added to λ/4 resonance in the housing, it was surmised that the resonance frequency of λ/4 resonance was shifted to a low frequency side as compared to a resonance frequency obtained in a case where λ/4 resonance is complete air-column resonance.

(Examples 6 and 7)

In Examples 6 and 7, a weight made of an ABS resin was mounted on a central portion of the largest outer wall surface (that is, the vibration portion) of the housing and other points were the same as in Example 2. In Example 6, the radius of the weight was set to 20 mm and the height of the weight was set to 10 mm. In Example 7, the radius of the weight was set to 20 mm and the height of the weight was set to 20 mm. In the structure of each of Examples 6 and 7, the housing and the weight were collectively formed by a 3D printer.

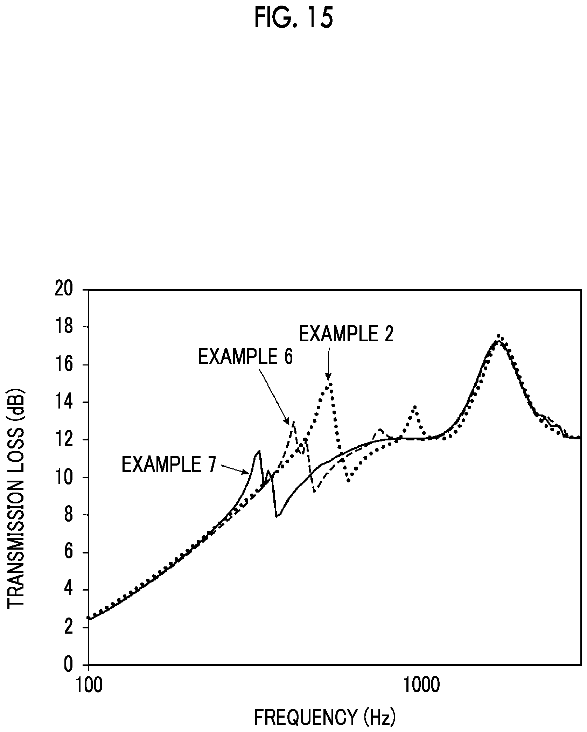

Further, in each of Examples 6 and 7, in the same manner as in Example 1, the transmittance and reflectivity of sound incident on the silencer for a ventilation passage were measured and a transmission loss was measured. Measurement results of the transmission loss are shown in Fig. 15. Fig. 15 also shows the measurement results of Example 2 for comparison. As shown in Fig. 15, it was found that a natural frequency was reduced and a peak of a transmission loss appeared on a lower frequency side in a case where the weight is mounted on the vibration portion.

It is possible to control a frequency at which a transmission loss is increased by providing the weight on the vibration portion as described above.

(Examples 8 and 9)

In Example 8, a silencer 10 having a structure different from that of Examples described above was produced using a 3D printer. The silencer 10 of Example 8 had a structure in which the shapes of both end portions of a wall 14 of a housing 12 in the Y direction were different from each other as shown in Fig. 16. Specifically, one end portion is formed of an ABS plate having a thickness of 2 mm, has a rectangular surface having a size of j 1 × j3 as shown in Fig. 16, and will be hereinafter referred to as a first vibration portion 24. The other end portion is formed of an ABS plate having a thickness of 2 mm as with the first vibration portion 24, but is provided with a bent portion at an intermediate position in the Z direction. That is, two vibration portions (hereinafter, a second vibration portion 26 and a third vibration portion 28) smaller than the first vibration portion 24 are provided at the other end portion with a bent part interposed therebetween. As shown in Fig. 16, the second vibration portion 26 has a rectangular surface having a size of j 1 × j2, and the third vibration portion 28 has a rectangular surface having a size of j 1 × j4.

The respective dimensions j 1 to j6 shown in Fig. 16 are as follows.

j1 = 139 mm, j2 = 55 mm, j3 = 127 mm, j4 = 50 mm, j5 = 24 mm, and j6 = 45 mm

Further, the specific resonance frequency fr (= $c/(2 \times L)$) in the housing 12 of the silencer 10 was 1234 Hz, and fr/2 (= $c/(4 \times L)$) was 617 Hz. Furthermore, the first natural frequencies of the first vibration portion 24, the second vibration portion 26, and the third vibration portion 28 were 286 Hz, 1078 Hz, and 1283 Hz, respectively. The first natural frequency of the first vibration portion 24 was sufficiently lower than fr/2 (= $c/(4 \times L)$).

In addition, QonPET as a sound absorbing member was disposed in the entire internal space of the housing 12 except for a space (that is, a flow channel portion) connecting the inlet opening and the outlet opening.

In Example 9, the thickness of the first vibration portion 24 was set to 2 mm and the thickness of each of the second vibration portion 26, the third vibration portion 28, and the bent part disposed between the second vibration portion 26 and the third vibration portion 28 was set to 20 mm. In Example 9, for the purpose of verifying an effect of the vibration of the vibration portion, the second vibration portion 26 and the third vibration portion 28 were made to be stiffer than those of Example 8 so that the second vibration portion 26 and the third vibration portion 28 were less likely to oscillate. The first natural frequency of the second vibration portion 26 in this case was 6264 Hz, and the first natural frequency of the third vibration portion 28 was 7046 Hz. In terms of other points, the configuration of Example 9 was the same as that of Example 8.

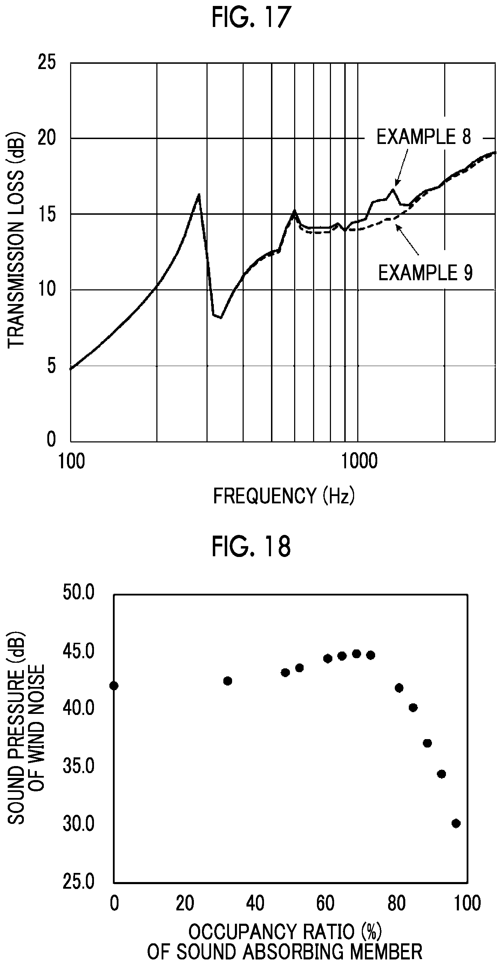

Further, in Examples 8 and 9, in the same manner as in Example 1, the transmittance and reflectivity of sound incident on the silencer for a ventilation passage were measured and a transmission loss was measured. Measurement results of the transmission loss are shown in Fig. 17.

As shown in Fig. 17, a peak of a transmission loss caused by a first natural frequency (= 286 Hz) of the first vibration portion 24 was confirmed in both Examples 8 and 9. In Example 8, a relatively broad peak of a transmission loss was obtained near a band of 1078 to 1283 Hz of the first natural frequencies of the second vibration portion 26 and the third vibration portion 28. Further, in Example 9 in which the first natural frequencies of the second vibration portion 26 and the third vibration portion 28 are high and these vibration portions were less likely to oscillate, a transmission loss exceeded a transmission loss of Example 8.

In a case where a plurality of vibration portions of which first natural frequencies are changed with a change in surface size or the like as in Example 8 are provided as described above, a peak of a transmission loss based on the first natural frequency of each vibration portion can be expressed for the plurality of frequencies.

All of Examples 1 to 9 described above are within the scope of the present invention, and the effects of the present invention are apparent from the measurement results of a transmission loss in each of Examples.

(Calculation example relating to wind noise)

In a case where wind flows in the housing of the silencer according to the embodiment of the present invention and the sound absorbing member is disposed in the housing, the path of the ventilation passage (specifically, a flow channel portion in the housing) is changed. As a result, wind noise is also changed. With regard to this point, a relationship between the volume of the sound absorbing member to be installed and the amount of wind noise was obtained from fluid calculation.

Specifically, fluid calculation was performed using a computer fluid dynamics (CFD) module of COMSOL, and the sound pressure of wind noise generated in the silencer was obtained using a Proudman analogy method. The silencer as a calculation target had the same structure as in Example 2. Here, in a case where a sound absorbing member is installed even in a hose part connected to each of the inlet opening and the outlet opening of the housing or in a flow channel portion in the housing and fills the hose part, ventilation performance is lost. Accordingly, in the fluid calculation, a state in which a ventilation portion between an inlet-side hose part and an outlet-side hose part in the internal space of the housing is opened (that is, a state in which an air portion surrounded by the sound absorbing member is provided). Then, while a ratio of a space, which is occupied by the sound absorbing member, to a space, which excludes the ventilation portion, of the internal space of the housing is changed, wind noise under each ratio was obtained. Calculation results are shown in Fig. 18.

As shown in Fig. 18, it was found that wind noise was changed in a case where the sound absorbing member was disposed in the housing, and wind noise was reduced as compared to a case where the sound absorbing member was not disposed, in a case where a ratio of the volume of a space, which was occupied by the sound absorbing member, to the volume of a space, which excluded the flow channel portion in the housing, is 80%. In this case, a ratio of a space, which is occupied by the sound absorbing member, to the entire internal space of the housing was 55%. Further, as shown in Fig.

18, it was found that wind noise can be further reduced in a case where a larger number of sound absorbing members are disposed in a space other than the ventilation portion to increase the occupancy ratio of the sound absorbing member.

Explanation of References

    10, 10X, 10Y: silencer for a ventilation passage
    12: housing
    12S: outer wall surface
    14: wall
    16: inlet opening portion
    16A: inlet opening
    18: outlet opening portion
    18A: outlet opening
    20: vibration portion
    22: weight
    24: first vibration portion
    26: second vibration portion
    28: third vibration portion
    30: sound absorbing member
    40: connecting member
    40a: same-diameter portion
    42: upstream connecting member
    44: downstream connecting member
    46, 48: connecting member-side opening portion
    50: flow channel portion
    60: rear space
    60a: first space
    60b: second space
    60c: communication portion
    62: partition member
    H: rear space
    Td: downstream ventilation passage
    Tu: upstream ventilation passage

Claims

1.  A silencer for a ventilation passage that includes a housing and deadens sound in a ventilation passage,

        wherein an internal space of the housing forms a part of the ventilation passage,
        the silencer for a ventilation passage comprising:
        an inlet opening that is formed in the housing and is positioned on one end side of a part of the ventilation passage;
        an outlet opening that is formed in the housing and is positioned on the other end side of a part of the ventilation passage;
        a sound absorbing member that is housed in the housing; and

a vibration portion that is provided on the housing and reduces sound passing through the ventilation passage.

2. The silencer for a ventilation passage according to claim 1,

wherein at least a part of an outer wall surface of the housing is a flat surface, and a portion, of which the outer wall surface is a flat surface, of the housing forms the vibration portion.

3. The silencer for a ventilation passage according to claim 1,

wherein the inlet opening is formed in one edge surface of an inner wall surface of the housing in a first direction, the outlet opening is formed in the other edge surface of the inner wall surface of the housing in the first direction, and in a case where a distance between the inlet opening and the outlet opening is denoted by L and a sound speed is denoted by c, a first natural frequency of the vibration portion is less than $c/(2 \times L)$.

4. The silencer for a ventilation passage according to claim 3, wherein the first natural frequency is less than $c/(4 \times L)$.

5. The silencer for a ventilation passage according to claim 1,

wherein the housing includes a wall surrounding the internal space of the housing, and the wall includes the vibration portion and each portion of the wall is made of the same material.

6. The silencer for a ventilation passage according to claim 5, wherein the vibration portion and a peripheral portion of the vibration portion are continuous with each other in the wall.

7. The silencer for a ventilation passage according to claim 1,

wherein the inlet opening is formed in one edge surface of an inner wall surface of the housing in a first direction, the outlet opening is formed in the other edge surface of the inner wall surface of the housing in the first direction, and with regard to a contour line of a cross section of which a normal direction is the first direction among cross sections of the housing, a ratio of a length of a longest side of the contour line to a length of a shortest side of the contour line is 1.2 or more.

8. The silencer for a ventilation passage according to claim 1,

wherein the inlet opening is formed in one edge surface of an inner wall surface of the housing in a first direction, the outlet opening is formed in the other edge surface of the inner wall surface of the housing in the first direction, and a range in which the inlet opening is present and a range in which the outlet opening is present overlap with each other in a second direction intersecting with the first direction and in a third direction intersecting with both the first direction and the second direction.

9. The silencer for a ventilation passage according to claim 1,

wherein the inlet opening is formed in one edge surface of an inner wall surface of the housing in a first direction, the outlet opening is formed in the other edge surface of the inner wall surface of the housing in the first direction, a length of the housing in a second direction intersecting with the first direction is longer than a length of the housing in a third direction intersecting with both the first direction and the second direction, and each of the inlet opening and the outlet opening is provided at a position closer to an end of the housing than to a middle of the housing in the second direction.

10. The silencer for a ventilation passage according to claim 1,

wherein the inlet opening is formed in one edge surface of an inner wall surface of the housing in a first direction, the outlet opening is formed in the other edge surface of the inner wall surface of the housing in the first direction, a connecting member is connected to at least one opening of the inlet opening or the outlet opening in the internal space of the housing, a connecting member-side opening portion connected to the at least one opening is provided on an inner side of the connecting member, and a size of the connecting member-side opening portion is increased as a distance from the at least one opening in the first direction is increased.

11. The silencer for a ventilation passage according to claim 10,
   wherein the connecting member is connected to each of the inlet opening and the outlet opening in the internal space of the housing.

12. The silencer for a ventilation passage according to claim 1,
   wherein a weight is mounted on the vibration portion.

13. The silencer for a ventilation passage according to claim 1,

   wherein the inlet opening is formed in one edge surface of an inner wall surface of the housing in a first direction,
   the outlet opening is formed in the other edge surface of the inner wall surface of the housing in the first direction,
   the sound absorbing member is disposed to avoid a range in which the inlet opening is present and a range in which the outlet opening is present in a second direction intersecting with the first direction and in a third direction intersecting with both the first direction and the second direction.

14. The silencer for a ventilation passage according to claim 13,
   wherein a ratio of a region, which is occupied by the sound absorbing member, to a volume of a space, which excludes a flow channel portion in the housing, of the internal space of the housing is 80% or more.

15. The silencer for a ventilation passage according to claim 1,
   wherein openings formed in the housing are only the inlet opening and the outlet opening.

16. The silencer for a ventilation passage according to claim 3 or 4,
   wherein the vibration portion is capable of deadening sound having a frequency of 2400 Hz or less by vibrating at the first natural frequency.

17. The silencer for a ventilation passage according to claim 3 or 4,
   wherein the vibration portion is capable of deadening sound having a frequency of 1700 Hz or less by vibrating at the first natural frequency.

18. The silencer for a ventilation passage according to claim 1,
   wherein the housing is provided with a plurality of the vibration portions.

19. The silencer for a ventilation passage according to claim 1,
   wherein a part of the internal space of the housing forms a resonance space that absorbs sound via resonance.

# FIG. 1

# FIG. 2

Tu

10

14(12S)

12

Td

UPSTREAM
SIDE

X DIRECTION

DOWNSTREAM
SIDE

Y DIRECTION

# FIG. 3

# FIG. 4

d1

10

12S

Z DIRECTION

MIDDLE POSITION
OF HOUSING

d2

16A(16)

14

18A(18)

12

Y DIRECTION

## FIG. 5

## FIG. 6A

# FIG. 6B

# FIG. 7

FIG. 8

EP 4 398 238 A1

## FIG. 9

## FIG. 10

## FIG. 11

## FIG. 12

## FIG. 13

## FIG. 14

FIG. 15

# FIG. 16

## FIG. 17

## FIG. 18

FIG. 19A

FIG. 19B

## FIG. 20A

## FIG. 20B

## INTERNATIONAL SEARCH REPORT

| International application No. |
|---|
| **PCT/JP2022/030476** |

**A. CLASSIFICATION OF SUBJECT MATTER**

*G10K 11/16*(2006.01)i; *F16L 55/033*(2006.01)i; *F24F 13/02*(2006.01)i; *G10K 11/172*(2006.01)i
FI: G10K11/16 100; F16L55/033; F24F13/02 H; G10K11/172

According to International Patent Classification (IPC) or to both national classification and IPC

**B. FIELDS SEARCHED**

Minimum documentation searched (classification system followed by classification symbols)

G10K11/16; F16L55/033; F24F13/02; G10K11/172

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-111347 A (YAMAHA CORP.) 20 May 2010 (2010-05-20) paragraphs [0010]-[0031], fig. 1-6 | 1, 3, 4, 7-9, 13-17 |
| Y | | 2, 5, 6, 12, 18, 19 |
| A | | 10, 11 |
| Y | JP 2009-198902 A (YAMAHA CORP.) 03 September 2009 (2009-09-03) paragraphs [0017]-[0034], fig. 1-11 | 2, 5, 6, 12 |
| Y | JP 2010-116118 A (YAMAHA CORP.) 27 May 2010 (2010-05-27) paragraphs [0033]-[0036], fig. 12 | 18 |
| Y | WO 2019/074061 A1 (FUJIFILM CORP.) 18 April 2019 (2019-04-18) paragraphs [0038]-[0076], fig. 1-20 | 19 |

☐ Further documents are listed in the continuation of Box C.    ☑ See patent family annex.

| * Special categories of cited documents: |
|---|
| "A" document defining the general state of the art which is not considered to be of particular relevance |
| "E" earlier application or patent but published on or after the international filing date |
| "L" document which may throw doubts on priority claim(s) or which is cited to establish the publication date of another citation or other special reason (as specified) |
| "O" document referring to an oral disclosure, use, exhibition or other means |
| "P" document published prior to the international filing date but later than the priority date claimed |

| |
|---|
| "T" later document published after the international filing date or priority date and not in conflict with the application but cited to understand the principle or theory underlying the invention |
| "X" document of particular relevance; the claimed invention cannot be considered novel or cannot be considered to involve an inventive step when the document is taken alone |
| "Y" document of particular relevance; the claimed invention cannot be considered to involve an inventive step when the document is combined with one or more other such documents, such combination being obvious to a person skilled in the art |
| "&" document member of the same patent family |

| Date of the actual completion of the international search | Date of mailing of the international search report |
|---|---|
| **14 October 2022** | **25 October 2022** |

| Name and mailing address of the ISA/JP | Authorized officer |
|---|---|
| **Japan Patent Office (ISA/JP) 3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/030476**

| Patent document cited in search report | | | Publication date (day/month/year) | Patent family member(s) | | | Publication date (day/month/year) |
|---|---|---|---|---|---|---|---|
| JP | 2010-111347 | A | 20 May 2010 | (Family: none) | | | |
| JP | 2009-198902 | A | 03 September 2009 | US 2009/0223738 A1 paragraphs [0061]-[0090], fig. 1-10 EP 2093754 A2 CN 101515453 A | | | |
| JP | 2010-116118 | A | 27 May 2010 | (Family: none) | | | |
| WO | 2019/074061 | A1 | 18 April 2019 | US 2020/0223375 A1 paragraphs [0170]-[0257], fig. 1-20 EP 3696809 A1 CN 111213201 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016133226 A